Europäisches Patentamt

European Patent Office

Office européen des brevets

(19)

(11) Veröffentlichungsnummer : **0 477 305 B1**

(12) ## EUROPÄISCHE PATENTSCHRIFT

(45) Veröffentlichungstag der Patentschrift :
02.11.95 Patentblatt 95/44

(51) Int. Cl.$^6$ : **G01L 23/22**

(21) Anmeldenummer : **91904232.5**

(22) Anmeldetag : **28.02.91**

(86) Internationale Anmeldenummer :
**PCT/DE91/00171**

(87) Internationale Veröffentlichungsnummer :
**WO 91/14163 19.09.91 Gazette 91/22**

(54) **SCHALTUNGSANORDNUNG ZUR KLOPFERKENNUNG.**

(30) Priorität : **15.03.90 DE 4008284**

(43) Veröffentlichungstag der Anmeldung :
**01.04.92 Patentblatt 92/14**

(45) Bekanntmachung des Hinweises auf die
Patenterteilung :
**02.11.95 Patentblatt 95/44**

(84) Benannte Vertragsstaaten :
**DE FR GB**

(56) Entgegenhaltungen :
**EP-A- 0 175 915**
**PATENT ABSTRACTS OF JAPAN, Band 7, Nr.**
**23 (P-171)(1168), 29. Januar 1983 ; & JP-A-57**
**175 938**

(73) Patentinhaber : **ROBERT BOSCH GMBH**
**Postfach 30 02 20**
**D-70442 Stuttgart (DE)**

(72) Erfinder : **DREYER, Adolf**
**Freiherr-V-Varnbuel Strasse 2**
**D-7254 Hemmingen (DE)**

EP 0 477 305 B1

EP 0 477 305 B1

**Beschreibung**

Stand der Technik

Die Erfindung betrifft eine Schaltungsanordnung zur Erkennung des Klopfens einer Brennkraftmaschine, mit einem Klopfsensor, der über ein eine Separierung der Klopffrequenz bewirkendes Filter mit einer Auswerteschaltung verbunden ist.

In der Kraftfahrzeugtechnik stellt der Klopfzustand einer Brennkraftmaschine einen gefährlichen Betriebszustand dar, der auf lange Sicht zur Beschädigung führen kann. Es sind daher Schaltungsanordnungen zur Erkennung des Klopfens einer Brennkraftmaschine bekannt, die mittels eines Klopfsensors das Frequenzspektrum der Brennkraftmaschine erfassen und nach Herausfiltern der relevanten Klopffrequenz einer Schaltungsanordnung zuleiten, die bei einer Klopferkennung die Betriebsparameter der Brennkraftmaschine derart verändert, daß sich ein klopffreier Betrieb einstellt. An die Erfassungs- und Auswerteeinrichtungen der bekannten Schaltungsanordnungen werden zunehmend höhere Anforderungen gestellt. So müssen aufgrund der modernen Brennkraftmaschinen-Konstruktionen immer höhere Klopffrequenzen erfaßt und ausgewertet werden. Dem stehen die relativ geringen Grenzfrequenzen der heute verwendeten Auswerteschaltungen entgegen. Ferner besteht die Forderung nach besonders einfach aufgebauten Anordnungen zur Auswertung des Klopfsensorsignals.

Aus dem Abstract der japanischen Offenlegungsschrift 57-175938, gegen das der Patentanspruch abgegrenzt ist, ist eine Klopferkennungseinrichtung bekannt, bei der das Ausgangssignal eines Klopfsensors, das drehzahlabhängig ist, durch Überlagerung eines weiteren drehzahlabhängigen Signales drehzahlunabhängig gemacht wird. Das so erhaltene drehzahlunabhängige Signal wird nach einer Bandpaßfilterung, in der die bei der Überlagerung entstehenden unerwünschten Signalteile ausgefiltert werden, zur eigentlichen Klopferkennung weiterverarbeitet.

Aus der EP-A 0 175 915 ist ein Verfahren zur Klopfregelung bekannt, bei dem das Klopfsensorsignal in einer mikrocomputergesteuerten Schaltung aufbereitet wird, wobei eine Anpassung der Signalhöhe mit Hilfe eines Regelverstärkers durchgeführt wird. Weiterhin wird das Signal des Klopfsensors gefiltert, gleichgerichtet und integriert. Zur eigentlichen Klopferkennung wird das während eines ersten Meßfensters integrierte Signal mit dem während eines zweiten Meßfensters integrietrten Signal, das nur Hintergrundanteile enthält, verglichen. Ausgehend vom Vergleichsergebnis wird auf Klopfen erkannt.

Sowohl die aus der japanischen Offenlegungsschrift bekannte Lösung als auch die aus der EP-A 0 175 915 bekannte Lösung gehen nicht von einer Frequenzverminderung vor der Weiterverarbeitung aus. Es müssen also bei der Verarbeitung höherfrequenter Signalanteile geeignete Bauelemente eingesetzt werden.

Vorteile der Erfindung

Die erfindungsgemäße Schaltungsanordnung mit den im Hauptanspruch genannten Merkmalen hat demgegenüber den Vorteil, daß trotz relativ hoher Frequenz des Klopfsensorsignals ein einfacher und damit kostengünstiger Aufbau der gesamten Schaltungsanordnung möglich ist, da aufgrund der anmeldungsgemäßen Lehre eine Frequenzherabsetzung erfolgt, wodurch eine relativ einfache Technik einsetzbar ist. Erfindungsgemäß erfolgt die Frequenzherabsetzung mit einer Mischstufe, die nach dem Superpositionsprinzip (Überlagerungsprinzip, Superhet-Prinzip) arbeitet und dadurch die Frequenz des Klopfsensorsignals herabsetzt. Diese herabgesetzte Frequenz wird dann der Auswerteschaltung zugeleitet.

Nach einer Weiterbildung der Erfindung ist vorgesehen, daß die Mischstufe mit einer Oszillatorfrequenz betrieben wird, die die gleiche Größe wie die Klopffrequenz aufweist. Dies hat den Vorteil, daß am Ausgang der Meßstufe ein Signal zur Verfügung steht, das der Hüllkurve des Klopfsignals entspricht.

Alternativ ist es jedoch auch möglich, daß die Mischstufe mit einer derart von der Klopffrequenz abweichenden Oszillatorfrequenz betrieben wird, daß die Frequenz des Ausgangssignals der Mischstufe kleiner als die Klopffrequenz ist. Diese Frequenzherabsetzung ermöglicht dann mit einfachen Mitteln eine Weiterbearbeitung des Signals. Die Oszillatorfrequenz kann um den Betrag der gewünschten Klopffilterfrequenz eines nachgeschalteten Filters (Bandpaß) unter oder über der Frequenz des zu erwartenden Klopfsignals liegen. Der Vorteil dieser Signalbearbeitung liegt -wie bereits erwähntdarin, daß Klopfsignale sehr hoher Frequenz verarbeitet werden können, wobei an die weitere Signalverarbeitung keine besonderen Anforderungen im Hinblick auf die Frequenzverarbeitungseigenschaften zu stellen sind.

Vorzugsweise ist die Mischstufe als ein erster Multiplizierer ausgebildet. Diesem wird das Klopfsensorsignal, das sich aus einem Grundgeräusch und gegebenenfalls vorliegenden Klopfsignalen zusammensetzt, und -als weitere Eingangsgröße- die Oszillatorfrequenz zugeführt. Der Ausgang des Multiplizierers ist an die Auswerteschaltung angeschlossen.

2

Insbesondere kann vorgesehen sein, daß zwischen die Mischstufe und den Klopfsensor eine Pegel-Konstanthalteschaltung geschaltet ist. Diese stellt sicher, daß das in der Amplitude vom Betriebszustand der Brennkraftmaschine abhängige Klopfsensorsignal auf einen konstanten Pegel gebracht und dann der weiteren Verarbeitung unterzogen wird. Amplitudenschwankungen des Klopfsensorsignals sind beispielsweise drehzahlbedingt und auch von der Betriebsstundenzahl der Brennkraftmaschine (Alterung) abhängig. Ferner werden diese Schwankungen von Bauelementstreuungen und -toleranzen bewirkt.

Nach einem bevorzugten Ausführungsbeispiel weist die Pegel-Konstanthalteschaltung einen zweiten Multiplizierer auf, der als Eingangsgrößen das Klopfsensorsignal und ein Regelsignal der Auswerteschaltung erhält. Das Regelsignal wird von einer zur Auswerteschaltung gehörenden Regelkreisschaltung geliefert. Aufgrund des Regelkreises ist somit stets ein konstanter Pegel am Ausgang der Pegel-Konstanthalteschaltung gewährleistet.

Insbesondere kann vorgesehen sein, daß die Auswerteschaltung als Mikrorechner ausgebildet ist. Dieser kann beispielsweise Teil eines Steuergeräts der Brennkraftmaschine sein.

Die Regelkreisschaltung des Mikrorechners ist vorzugsweise über ein Mittelwertbildner an die Pegel-Konstanthalteschaltung angeschlossen. Dieser Mittelwertbildner ist erforderlich, um aus dem vom Mikrorechner stammenden logischen Signal, das insbesondere ein pulsbreitenmoduliertes Signal, vorzugsweise pulsbreitenmoduliertes Rechtecksignal, ist, einen Gleichspannungsanteil zu gewinnen. Dies erfolgt durch Mittelwertbildung des pulsbreitenmodulierten Signals. Vorzugsweise wird der Mittelwertbildner von einem RC-Glied gebildet.

Das eingangs erwähnte Filter, das aus dem Klopfsensorsignal die relevante Klopffrequenz herausfiltert, ist erfindungsgemäß als Tiefpaß ausgebildet.

Dies ist ein besonderer Vorzug der erfindungsgemäßen Ausgestaltung, da auf die aus dem Stand der Technik bekannten Bandfilter (Klopffilter) verzichtet werden kann. Vielmehr reicht für die Signalfilterung ein ganz einfacher Tiefpaß, vorzugsweise erster Ordnung, aus. Dies ist insbesondere dann der Fall, wenn -wie bisher- ein Klopffilter mit nur sehr geringer Güte (zum Beispiel Q = 3) eingesetzt wird. Damit ist bei der erfindungsgemäßen Anordnung auch eine besonders einfache Applizierbarkeit gegeben: Anstelle der bisherigen Einstellung der Klopffiltermittenfrequenz (Bandfilter) sowie der Klopffiltergüte, können erfindungsgemäß auf einfache Weise die Parameter für das Oszillatorsignal und die Tiefpaßeckfrequenz festgelegt werden. Letztere läßt sich zum Beispiel mittels eines Trimmers einfach und rückwirkungsfrei einstellen. Der erfindungsgemäße Tiefpaß bewirkt die Beseitigung von hochfrequenten, unerwünschten Mischprodukten.

Nach einer besonders bevorzugten, einfachen Ausführungsform wird der Tiefpaß von einem RC-Glied gebildet.

Vorzugsweise werden als erster und zweiter Multiplizierer OTA-Bauteile (Operational Transconductance Amplifier) eingesetzt.

Bei den bisher beschriebenen Ausführungsvarianten ist es möglich, daß keine Synchronität zwischen Oszillatorsignal und Klopfsignal vorliegt. Diese fehlende Synchronität kann dazu führen, daß nicht nur die Hüllkurve des Klopfsignals allein, sondern auch eine Schwebungsfrequenz erzeugt wird. Demzufolge entsteht also keine verzerrungsfreie Demodulation, was jedoch nicht wesentlich ist, da für die Detektion eines Klopfzustandes der Pegel herangezogen wird. Die Schwebungsfrequenz kann allerdings dazu führen, daß sich ein Wert "Null" einstellt, mithin keine Klopferkennung möglich ist. Jedoch auch dieser Spezialfall der Schwebungsfrequenz läßt sich dann vermeiden, wenn das Klopfsignal zwei Mischstufen zugeführt wird, die mit gleichen Oszillatorfrequenzen unterschiedlicher Phasenlage betrieben werden. Hierdurch ist stets sichergestellt, daß ein auftretendes Klopfen erkannt und die entsprechende Gegenmaßnahme getroffen werden kann. Insbesondere beträgt der Phasenwinkelunterschied 90°.

Den beiden Oszillatorfrequenzen können zwei um 90° phasenverschobene Taktsignale zugeordnet sein, das heißt, diese Taktsignale weisen die erwähnten Oszillatorfrequenzen auf. Insbesondere ist es vorteilhaft, wenn die Taktsignale von dem bereits erwähnten Mikrorechner geliefert werden. Es handelt sich dann um Logiksignale. Demnach liefert der Mikrorechner die beiden Taktsignale, die um 90° zueinander phasenverschoben sind.

Alternativ ist es jedoch auch möglich, daß die Taktsignale mittels zweier 2er-Teiler aus einem Grundtaktsignal doppelter Frequenz gebildet werden, wobei der eine 2er-Teile positiv- und der andere 2er-Teiler negativflankengetriggert ist. Durch diese unterschiedliche Triggerung und die beiden 2er-Teiler werden damit aus dem Grundtaktsignal die beiden um 90° zueinander phasenverschobenen Taktsignale gewonnen.

Ferner ist es möglich, daß die Ausgänge der beiden Multiplizierer jeweils an einen Tiefpaß angeschlossen sind und daß die Tiefpaßausgänge mittels einer Verknüpfungsschaltung zusammengeführt werden. Die Verknüpfungsschaltung ist vorzugsweise als Additionsstelle ausgebildet. Mithin sind zwei Multiplizierer und auch zwei Tiefpässe erforderlich. Erst durch die Verknüpfungsschaltung wird aus den Ausgangssignalen der beiden Tiefpässe wieder ein gemeinsames Signal gebildet, das dann der Weiterverarbeitung unterliegt. Alternativ kann jedoch auch derart vorgegangen werden, daß die Ausgänge der beiden Multiplizierer, die jeweils das von der Pegel-Konstanthalteschaltung gebildete Signal erhalten, mittels der Verknüpfungsschaltung zusammengeführt sind und daß der Ausgang der Verknüpfungsschaltung zu einem Tiefpaß führt. Insofern ist anstelle der zuvor erwähnten beiden Tiefpässe hier nur ein Tiefpaß erforderlich.

Der Rechenaufwand der Auswerteschaltung läßt sich erniedrigen, wenn zwischen Tiefpaß und Auswerteschaltung ein Schwellwertschalter liegt. Der Schwellwertschalter registriert, ob eine Pegelüberschreitung eines Vorgabewerts vorliegt oder nicht. Diese Aufgabe braucht dann nicht von einem Analog/Digital-Konverter mit gespeichertem Vergleichswert durchgeführt werden, so daß die Rechenbelastung geringer ist. Für eine exakte Klopfauswirkung ist es dann durch den Rechner nur noch erforderlich, die Summe der Anzahl der Pegelüberschreitungen pro Zeiteinheit festzustellen und dadurch eine exakte Klopfzustandserkennung zu ermöglichen. Der Vergleich mit einem Vorgabewert usw. entfällt dann für den Rechner.

Alternativ ist es jedoch auch möglich, daß anstelle des Schwellwertschalters zwischen den Tiefpaß und der Auswerteschaltung ein Gleichrichter und ein nachfolgender Integrator geschaltet sind. Hierdurch wird der Rechenaufwand für den Mikrorechner noch weiter verkleinert; es liegt quasi eine größtenteils hardwaremäßige Auswertung vor. Der Gleichrichter ist erforderlich, um bei negativen Signalen sicherzustellen, daß der Integrator nicht wieder "herunterintegriert". Der Mikrorechner, der an den Ausgang des Integrators angeschlossen ist, hat nur noch zu entscheiden, ob der Integrationswert einen Vorgabewert überschreitet oder nicht. Wird der Vorgabewert überschritten, so liegt ein Klopfzustand vor. Die Funktion des Mikrorechners kann daher mit einem Komparator verglichen werden.

Zeichnung

Die Erfindung wird im folgenden anhand der Figuren näher erläutert. Es zeigen:

Figur 1      ein erstes Ausführungsbeispiel einer Schaltungsanordnung zur Erkennung des Klopfens einer Brennkraftmaschine,
Figur 2      ein weiteres Ausführungsbeispiel einer Schaltungsanordnung,
Figur 3      ein weiteres Ausführungsbeispiel einer Schaltungsanordnung,
Figur 4      ein weiteres Ausführungsbeispiel einer Schaltungsanordnung,
Figur 5      ein schematisiertes Blockschaltbild einer Schaltungsanordnung,
Figur 6      ein weiteres Ausführungsbeispiel einer Schaltungsanordnung,
Figur 7      ein weiteres Ausführungsbeispiel einer Schaltungsanordnung,
Figur 8      ein weiteres Ausführungsbeispiel einer Schaltungsanordnung,
Figur 9      ein weiteres Ausführungsbeispiel einer Schaltungsanordnung und
Figur 10     ein letztes Ausführungsbeispiel einer Schaltungsanordnung.

Beschreibung von Ausführungsbeispielen

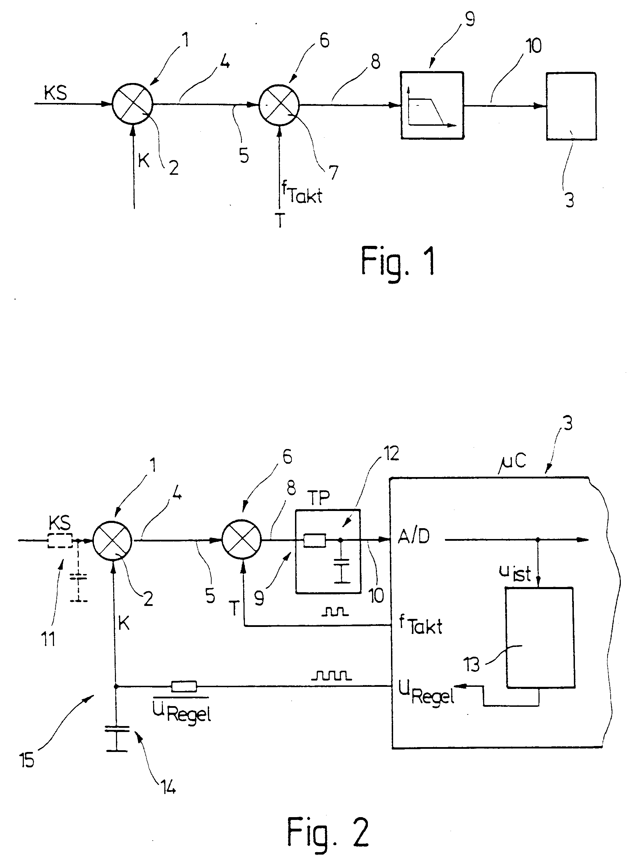

Die Figur 1 zeigt ein Prinzipschaltbild der erfindungsgemäßen Schaltungsanordnung. Diese dient zur Erkennung des Klopfens einer Brennkraftmaschine. Sie weist einen (nicht dargestellten) Klopfsensor auf, dessen Klopfsensorsignal KS einer Pegel-Konstanthalteschaltung 1 zugeführt wird. Die Pegel-Konstanthalteschaltung 1 ist als Multiplizierer 2 ausgebildet. Dieser erhält als weitere Eingangsgröße ein Regelsignal K. Das Regelsignal K wird von einer Auswerteschaltung 3 geliefert. Hierauf wird im folgenden noch näher eingegangen.

Der Ausgang 4 des Multiplizierers 2 ist mit einem Eingang 5 einer Mischstufe 6 verbunden. Die Mischstufe 6 ist ebenfalls als Multiplizierer 7 ausgebildet. Insofern bildet der Multiplizierer 7 einen ersten und der Multiplizierer 2 einen zweiten Multiplizierer.

Als weitere Eingangsgröße erhält der erste Multiplizierer 7 eine Oszillatorfrequenz $f_{Takt}$ eines Taktsignals T. Das Taktsignal T weist die Beziehung

$$\hat{U} \sin\omega_K t$$

Mit

$$\omega_K = 2\pi f_{Klopf}.$$

Das Taktsignal T entstammt -ebenso wie das Regelsignal K- der Auswerteschaltung 3.

Der Ausgang 8 der Mischstufe 6 ist mit einem Filter 9 verbunden, daß als Tiefpaß TP ausgebildet ist. Vorzugsweise handelt es sich um einen Tiefpaß erster Ordnung, der -in einfacher Weise- von einem RC-Glied realisiert sein kann. Der Ausgang 10 des Filters 9 führt zur Auswerteschaltung 3.

Die Anordnung ist nun derart ausgebildet, daß am zweiten Multiplizierer 2 durch das Regelsignal K am Ausgang 4 ein im wesentlichen konstanter Pegel erzeugt wird. Dies bedeutet, daß das Klopfsensorsignal KS, dessen Amplitude unter anderem durch die unterschiedlichen Betriebszustände der Brennkraftmaschine schwankt, auf einen konstanten Pegel geregelt wird. Das Ausgangssignal des zweiten Multiplizierers 2 gelangt dann zum ersten Multiplizierer 7, der die Mischstufe 6 bildet und daher nach dem Überlagerungsprinzip (Superheterodynprinzip) eine Superposition mit dem Taktsignal T vornimmt. Hierbei ist die Frequenz (Oszillatorfreguenz $f_{Takt}$) des Taktsignals T ebenso groß wie die zu erwartende Klopffrequenz $f_{Klopf}$ der Brennkraftmaschine gewählt. Das dabei entstehende Signalgemisch enthält unter anderem die hier relevanten, den Klopfzustand kennzeichnenten Informationen in einer Audiofrequenzlage. Es liegt ein Signal vor, daß der Hüllkurve des Klopfsignals entspricht. Diese läßt sich mit einfachen Mitteln weiterverarbeiten. Das Ausgangssignal der Mischstufe 6 wird über den Tiefpaß TP geleitet, um hochfrequente, unerwünschte Mischprodukte zu beseitigen. In der nachfolgenden Auswerteschaltung 3 wird dann das vom Filter 9 stammende Signal im Hinblick auf einen möglichen Klopfzustand der Brennkraftmaschine ausgewertet.

In der Figur 2 ist die Schaltungsanordnung der Figur 1 detaillierter dargestellt. Es ist erkennbar, daß das Klopfsensorsignal KS gegebenenfalls noch über ein RC-Glied 11 geleitet wird, um eine hinreichende elektromagnetische Verträglichkeit (EMV) zu erzielen und einen Empfang über Oberwellen des Oszillatorsignals zu vermeiden (Nebenempfangsstellen). Ferner zeigt die Figur 2 auf, daß der Tiefpaß TP mittels eines RC-Glieds 12 realisiert sein kann. Die Auswerteschaltung 3 ist als Mikrorechner $\mu$C ausgebildet. Sie weist zur Erzeugung des Regelsignals K eine Regelkreisschaltung 13 auf, die aus dem vom Filter 9 stammenden Signal, das einem Analog/Digitalwandler (A/D-Wandler) des Mikrorechners $\mu$C zugeleitet wird, eine Ist-Vorgabe $u_{ist}$ als Eingangsgröße erhält. Am Ausgang der Regelkreisschaltung 13 steht eine Regelspannung $U_{Regel}$ zur Verfügung, die einem Mittelwertbildner 14 zugeleitet wird, der als RC-Glied 15 ausgeführt ist. Der Mittelwert der Regelspannung $\overline{U_{Regel}}$ stellt das Regelsignal K dar.

Der Mittelwertbildner 14 ist erforderlich, da die Regelspannung $U_{Regel}$ nur logische Zustände annehmen kann. Es handelt sich um ein Rechtecksignal, das -für die Regelfunktion- pulsbreitenmoduliert ist. Je größer die Pulsbreite wird, um so höher steigt der Mittelwert am Mittelwertbildner 14, der eine Gleichspannung darstellt, die mit dem Klopfsensorsignal KS am zweiten Multiplizierer 2 zur Bildung eines etwa konstanten Pegels multipliziert wird.

Bei der Oszillatorfrequenz $f_{Takt}$ handelt es sich um eine Rechteckimpulsfolge. Dies ist in der Figur 2 ebenfalls angedeutet. Diese Rechteckimpulsfolge führt zu den bereits erwähnten hochfrequenten Mischprodukten, die jedoch durch den Tiefpaß TP eliminiert werden.

Bei der Schaltungsanordnung der Figur 2 ist ein relativ großer Rechenaufwand im Mikrorechner $\mu$C erforderlich, da dort die gesamte Signalverarbeitung erfolgt. Die A/D-Konversationszeit des genannten Analog/Digital-Wandlers ist klein genug zu wählen, um das Abtasttheorem in einem ausreichenden Maße zu erfüllen. Dies wird von marktgängigen A/D-Wandlern geleistet. Die Verarbeitung des Klopfsignals erfolgt mittels der Software des Mikrorechners $\mu$C (Betragsbildung, Integration durch Summation, Bewertung usw.).

Durch die Verwendung der erwähnten Rechtecksignale können die bereits aufgezeigten Nebenempfangsstellen an der Mischstufe 6 entstehen, die auf höheren Harmonischen liegen. Dies würde nicht eintreten, wenn man als Taktsignal T eine Sinus-Spannung heranzieht. Allerdings verhindert der Tiefpaß TP eine negative Auswirkung der genannten höheren Harmonischen.

Als Multiplizierer 2, 7 werden vorzugsweise handelsübliche Operational transconductance amplifier (OTA's) eingesetzt, die Klopfsignale sehr hoher Frequenz verarbeiten können.

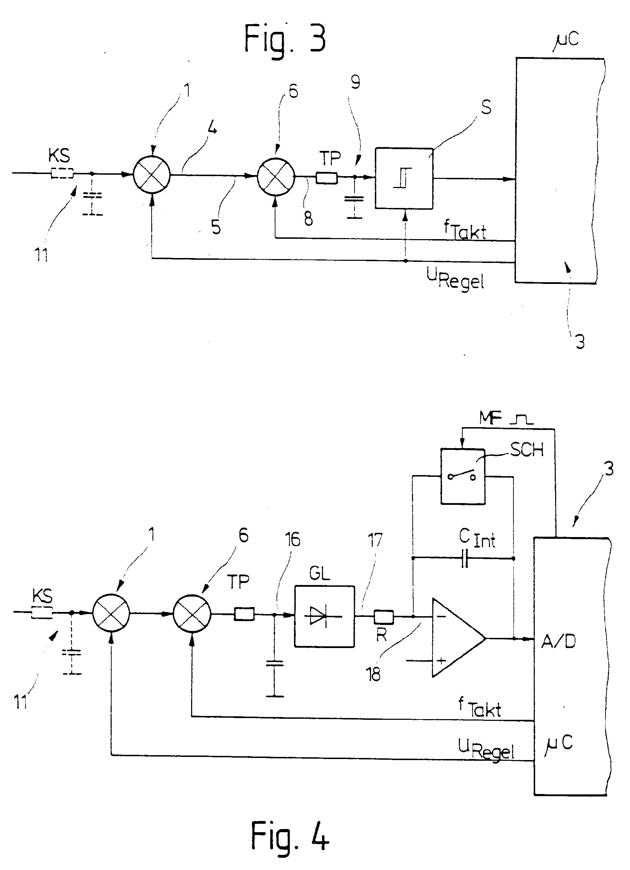

Die Figur 3 zeigt ein weiteres Ausführungsbeispiel einer erfindungsgemäßen Schaltungsanordnung, bei der der Mikrorechner $\mu$C weniger Rechenleistung zu bewältigen hat, da teilweise eine hardwaremäßige Auswertung des Klopfsensorsignals KS erfolgt.

Gegenüber der Figur 1 unterscheidet sich die Figur 3 im wesentlichen dadurch, daß zwischen den Tiefpaß TP und den Mikrorechner $\mu$C ein Schwellwertschalter S geschaltet ist. Dieser erkennt Überschreitungen eines Normalpegels (Vorgabewert) und löst dann einen Interrupt aus. Der Schwellwertschalter S kann -wie in der Figur 3 angedeutet- eine Hysterese aufweisen. Der Ansprechpegel kann konstant oder -wie in Figur 3 dargestellt- von der Größe der Regelspannung $U_{Regel}$ beeinflußt werden. Diese Schaltungsvariante macht den Analog-Digital-Wandler des Mikrorechner $\mu$C entbehrlich, da die Entscheidung, ob eine Pegelüberschreitung vorliegt, die auf ein Klopfen hindeutet, von dem Schwellwertschalter S getroffen wird. Die exakte Klopfauswertung wird jedoch vom Rechner vorgenommen, der die Summe der Anzahl der Pegelüberschreitungen pro Zeiteinheit ermittelt und hieraus die Entscheidung fällt, ob die Brennkraftmaschine klopft oder nicht.

Die Figur 4 zeigt eine weitere Variante auf, die noch weniger Rechenleistung erfordert. Anstelle des Schwellwertschalters S ist zwischen Tiefpaß TP und Mikrorechner $\mu$C ein Gleichrichter GL und Integrator I geschaltet. Im einzelnen handelt es sich bei dem Gleichrichter GL um einen Hüllkurvendetektor, dessen Eingang 16 an dem Tiefpaß TP angeschlossen ist. Der Ausgang 17 des Gleichrichters Gl ist über einen Widerstand R an den Minus-Eingang 18 eines Operationsverstärkers OP angeschlossen. Vom Minus-Eingang 18 führt ein Integrierkondensator $C_{Int}$ zum Ausgang 19 des Operationsverstärkers OP. Parallel zum Integrierkondensator $C_{Int}$ liegt ein Schalter SCH, der von einem Meßfenster MF des Mikrorechner $\mu$C geschaltet wird. Hierdurch wird berücksichtigt, daß die Integration immer nur unmittelbar nach einer Zündung der Brennkraftmaschine erfolgt.

In der Schaltungsanordnung gemäß Figur 3 liegt demgemäß schon weitgehend eine hardwaremäßige Signalverarbeitung vor. Der Mikrorechner μC muß lediglich noch entscheiden, ob der Integrationswert am Ausgang 19 einen Vorgabewert überschreitet, so daß auf einen Klopfbetrieb der Brennkraftmaschine geschlossen werden kann. Mithin ist die Funktion des Mikrorechners μC in dieser Hinsicht mit einem Komparator vergleichbar.

Die zu detektierenden Klopfschwingungen entstehen durch Hohlraumresonanzen im Restvolumen des entsprechenden Zylinders der Brennkraftmaschine. Unter Restvolumen ist hier das Volumen zu verstehen, das bei der oberen Totpunkt-Stellung vorliegt. Für solche Hohlraumschwingungen ist die Lösung der zugehörigen Wellengleichung eine Lösungsschar, das heißt, es können z. B. auch solche Wellen in Resonanz kommen, deren halbe und ungeradzahlige Vielfache der halben Wellenlänge in den genannten Hohlraum "hineinpassen". Es wäre daher denkbar, diese Oberschwingen durch ein passendes oberwellenhaltiges Taktsignal ebenfalls in den Audiobereich umzusetzen, um das Signal-Stor-Verhältnis noch weiter zu verbessern.

Die der Erfindung zugrundeliegenden Vorteile bestehen in der Verwendung handelsüblicher OTA's als Multiplizierer 2 bzw. 7. Ferner genügt durch die Faltung des Klopfsignals im Frequenzbereich ein einfacher Tiefpaß TP erster Ordnung anstelle des bisher im Stand der Technik verwendeten Bandpaßfilters (Klopffilter). Ferner läßt sich die Schaltung auf einfache Weise applizieren. Die Filterparameter des Tiefpasses TP und Oszillatorfrequenz $f_{Takt}$ sind unabhängig und rückwirkungsfrei einstellbar. Wegen der niedrigen Verarbeitungsfrequenz kann die Signalverarbeitung weitgehenst im Mikrorechner μC vorgenommen werden, ohne daß ein besonders großer Rechenaufwand betrieben werden muß. Ferner besteht -wie erwähnt- zusätzlich auch die Möglichkeit der Erfassung von Oberschwingungen des Klopfsignals als weitere Informationsquelle.

Grundsätzlich- ist es auch möglich, den ersten Multiplizierer 7 und den zweiten Multiplizierer 2 durch einen einzigen Multiplizierer zu ersetzen. Hierdurch verringert sich nochmals der Schaltungsaufwand.

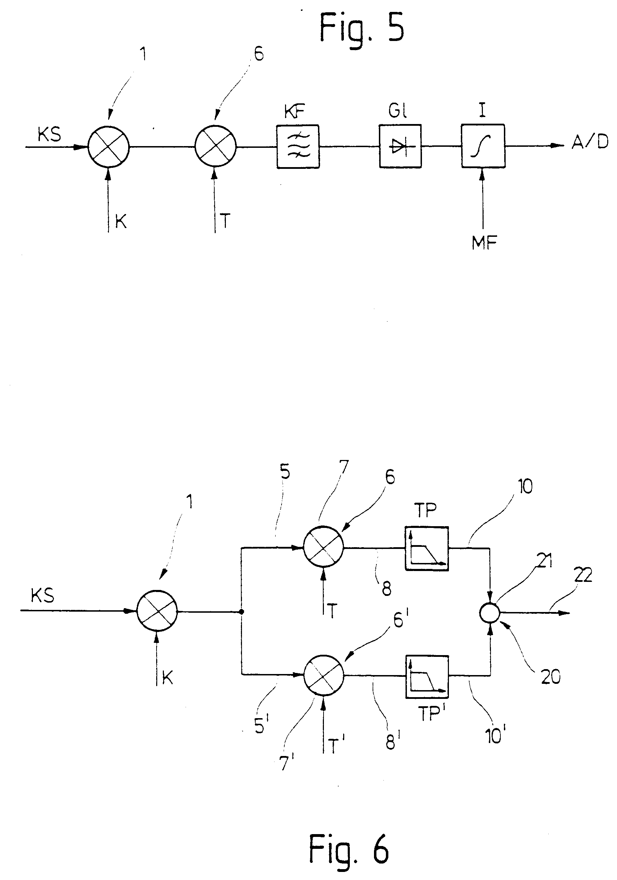

Das Ausführungsbeispiel der Figur 5 unterscheidet sich von den bisherigen Ausführungsbeispielen dadurch, daß für das Taktsignal T eine Oszillatorfrequenz $f_{Takt}$ gewählt wird, die nicht mit der Frequenz des zu erwartenden Klopfsignals übereinstimmt. Vielmehr erfolgt -nach dem Superhetprinzip- eine Herabsetzung der relativ hohen Frequenz des Klopfsensorssignals KS in eine niedrigere Frequenz, die dann mit einfachen Mitteln weiterverarbeitet werden kann. Im übrigen entspricht der Aufbau der Anordnung der Figur 5 dem Ausführungsbeispiel der Figur 4, wobei jedoch anstelle des Tiefpasses TP ein -wie im Stand der Technik übliches- Klopffilter KF, also ein Bandfilter, eingesetzt ist. Das der Mischstufe zugeführte Taktsignal T kann in seiner Frequenz um den Betrag der gewünschten Klopffilterfrequenz (Klopffilter KF) unter oder über der Frequenz des zu erwartenden Klopfsignals liegen. Der Vorteil dieser Signalverarbeitung besteht -wie bereits erwähnt- darin, daß Klopfsignale sehr hoher Frequenz verarbeitet werden können, wobei die weitere Signalverarbeitung keine besonderen Anforderungen im Hinblick auf die Schnelligkeit (Slew-Rate der Bauelemente) stellt.

Ein weiteres Ausführungsbeispiel, das in der Figur 6 dargestellt ist, weist anstelle einer Mischstufe zwei Mischstufen 6 und 6' auf. Die Eingänge 5 und 5' dieser Mischstufen 6 und 6', die ebenfalls als Multiplizierer 7 bzw. 7' ausgebildet sind, sind beide an den Ausgang 4 der Pegel-Konstanthalteschaltung 1 angeschlossen. Dem Multiplizierer 7 wird das Taktsignal T und dem Multiplizierer 7' ein Taktsignal T' zugeführt, wobei sich die Phasenlage dieser beiden Taktsignale T, T' um 90° unterscheidet. Für das Taktsignal T gilt die Beziehung

$$\hat{U} \sin (2\pi f_K t).$$

Für das Taktsignal T'

$$\hat{U} \sin \left(2\pi f_K + \frac{\pi}{2}\right) t$$

wobei $f_K$ die Klopffrequenz darstellt. Die Ausgänge 8 und 8' der Multiplizierer 7 und 7' führen jeweils zu einem Tiefpaß TP bzw. TP', deren Ausgänge 10 bzw. 10' an eine Verknüpfungsschaltung 20 angeschlossen sind. Vorzugsweise ist die Verknüpfungsschaltung 20 als Additionsstelle 21 ausgebildet. Der Ausgang 22 wird dann -in üblicherweise- der Auswerteschaltung 3 zugeführt.

Die Anordnung der Figur 6 verhindert, daß aufgrund fehlender Synchronität zwischen dem Taktsignal und dem Klopfsignal eine Klopfauswertung nicht möglich ist. Aufgrund dieser fehlenden Synchronität kann es bei der Klopfauswertung dazu kommen, daß nicht die Hüllkurve des Klopfsignals allein vorliegt, sondern daß zusätzlich Schwebungsfrequenzen auftreten. Es entsteht damit keine verzerrungsfreie Demodulation, was jedoch nicht von Wichtigkeit ist, da die Information über eine klopfende Verbrennung in der Überschreitung eines bestimmten Amplitudenwertes liegt, der den normalen Grundgeräuschen zugeordnet ist. Solche Amplitudenerhöhungen können auch bei Anwesenheit von Schwebungsfrequenzen erkannt werden. Jedoch kann die Schwebung auch dazu führen, daß sich ein Ausgangswert "Null" zumindest zeitweise ergibt. In diesem Falle läßt sich dann keine Klopfsensierung vornehmen. Die Schaltungsanordnung der Figur 6 verhindert eine derartige Situation, das heißt, bei der Muliplikation zweier Signale gibt es nicht den genannten Spezialfall, daß das Produkt "Null" wird. Hierzu werden die beiden Multiplizierer 7 und 7' eingesetzt, die mit zwei, um 90° phasenverschobenen Oszillatorfrequenzen $f_{Takt}$, $f'_{Takt}$ betrieben werden. Es kommt zur sogenannten Quadraturdemodulation.

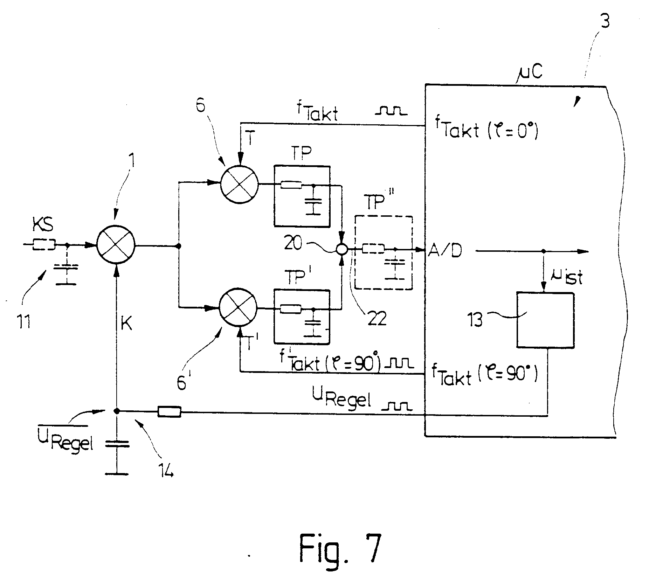

Die Figur 7 zeigt nochmals eine Gesamtschaltung entsprechend der Figur 2, wobei die Ausgestaltung der Figur 6 berücksichtigt ist. Als Alternative ist gestrichelt angedeutet, daß anstelle der beiden Tiefpässe TP und TP′ ein Tiefpaß TP″ eingesetzt wird, der an den Ausgang 22 der Verknüpfungsschaltung 20 angeschlossen wird und mit seinem Ausgang 10″ mit dem Mikrorechner μC verbunden ist. Im übrigen entspricht der Schaltungsaufbau der Figur 7 der bereits erwähnten Anordnung, so daß hierauf nicht näher eingegangen zu werden braucht.

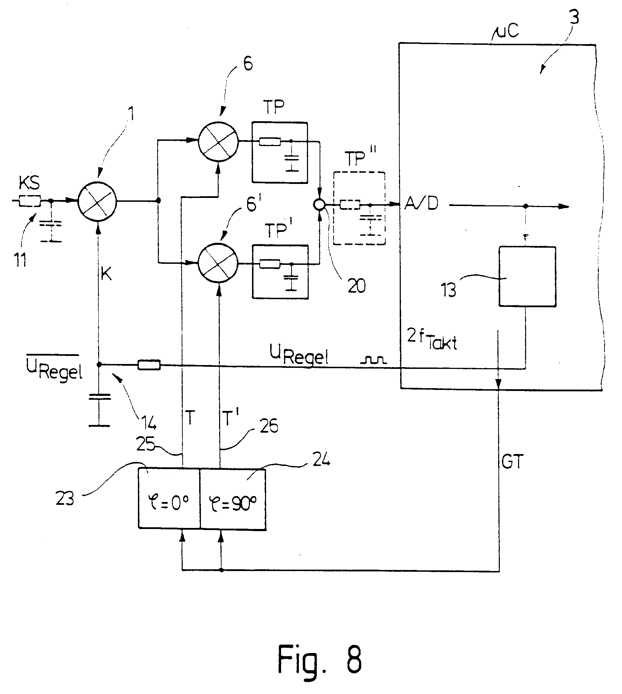

Wie bereits erwähnt, ist es zur Vermeidung von Schwebungen, die zu einem Ausgangssignal mit dem Wert "Null" führen, erforderlich, zwei Taktsignale T, T′ einzusetzen, die relativ zueinander eine Phasenverschiebung von 90° aufweisen. Die Figur 8 zeigt hierzu ein bevorzugtes Ausführungsbeispiel. Grundsätzlich ist es möglich, daß der Mikrorechner μC zwei 90° gegeneinander phasenverschobene Oszillatorfrequenzen $f_{Takt}$ und $f'_{Takt}$ erzeugt. Bei dem bevorzugtem Ausführungsbeispiel der Figur 8 wird alternativ jedoch derart vorgegangen, daß der Mikrorechner μC ein Grundtaktsignal GT erzeugt, das die doppelte Frequenz des Taktsignals T bzw. T′ aufweist. Es sind zwei 2er-Teiler 23 und 24 vorgesehen, denen als Eingangssignal das Grundtaktsignal GT zugeführt wird. Der eine der 2er-Teiler triggert auf der positiven, der andere der 2er-Teiler triggert auf der negativen Flanke des Grundtaktsignals GT. Dieses führt dazu, daß an den Ausgängen 25 und 26 der 2er-Teiler 23 und 24 Taktsignale T und T′ zur Verfügung stehen, die eine 90° Phasenverscniebung zueinander aufweisen. Diese Taktsignale T und T′ werden dann in der bereits beschriebenen Weise den Multiplizieren 7 und 7′ zugeführt. In der Figur 8 sind zwei Tiefpässe TP und TP′ wiedergegeben; alternativ ist es -wie erwähnt- jedoch auch möglich, anstelle der beiden Tiefpässe TP, TP′ nur ein Tiefpaß TP″ am Ausgang der Verknüpfungsschaltung 20 vorzusehen.

In der integrierten Klopfausgleichschaltung kann die erwähnte 90°-Aufspaltung Bestandteil des Mikrorechners μC sein; es tritt dann in der Peripherie kein Mehraufwand auf.

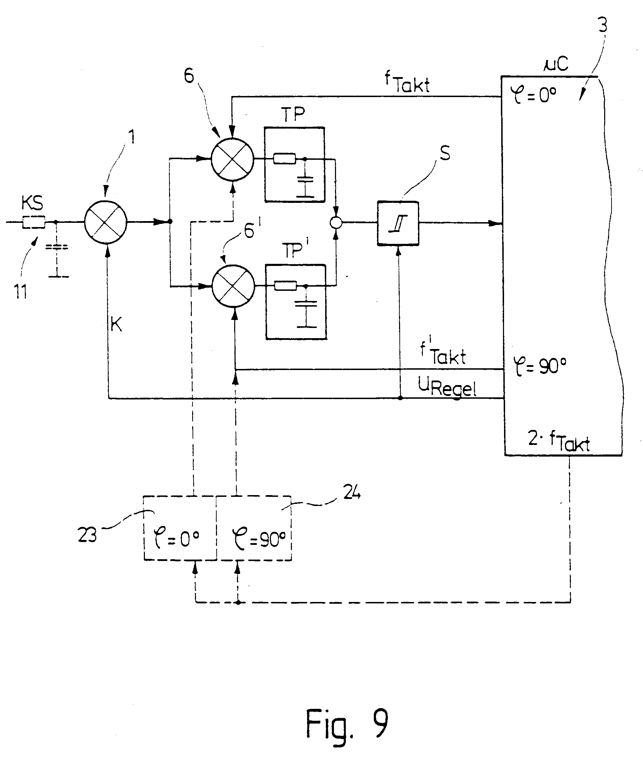

Die Figur 9 zeigt ein Ausführungsbeispiel, bei dem -entsprechend der Ausführungsform der Figur 3- ein Schwellwertschalter S eingesetzt ist. Im Hinblick auf die weitere Ausgestaltung kann auf die vorstehenden Ausführungen verwiesen werden.

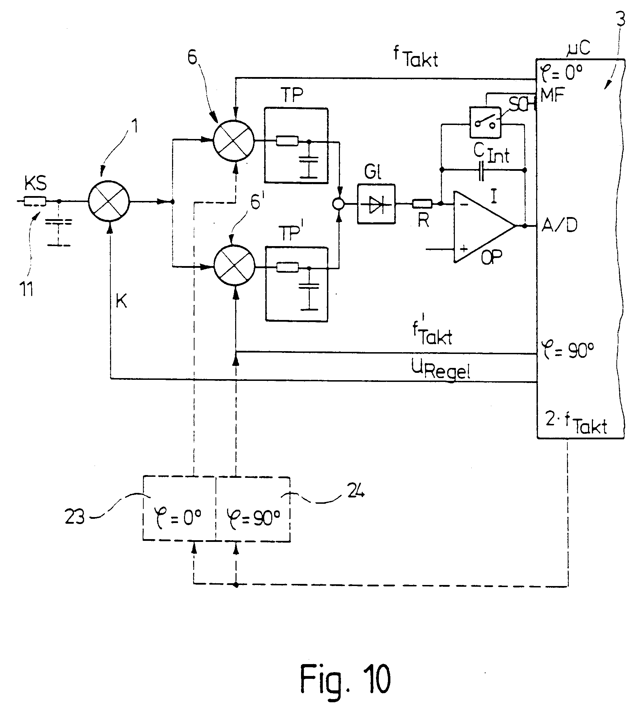

Die Figur 10 betrifft schließlich eine Ausführungsform die der Figur 4 entspricht; das heißt, es ist ein Gleichrichter GL sowie ein Integrator I vorgesehen.

## Patentansprüche

1.  Schaltungsanordnung zur Erkennung des Klopfens einer Brennkraftmaschine, mit einem Klopfsensor, der der Brennkraftmaschine zugeordnet ist und ein Klopfsensorsignal (KS) erzeugt, das die vom Klopfen verursachten Frequenzanteile umfaßt, mit einer Mischstufe (6), in der das Klopfsensorsignal (KS) mit einem weiteren Signal (T) überlagerbar ist sowie mit Filtermitteln (9) zur Separierung der Signalanteile, die etwa der erwarteten Klopffrequenz entsprechen, wobei das der Mischstufe (6) zugeführte weitere Signal (T) von einem Oszillatormittel erzeugbar ist und eine Frequenz ($f_{Takt}$) aufweist, die die gleiche Größe wie die Klopffrequenz $f_K$ oder eine von der Klopffrequenz $f_K$ abweichende Oszillatorfrequenz $f_{Takt}$ aufweist, dadurch gekennzeichnet, daß die Mischung bzw. Überlagerung der Signale so erfolgt, daß am Ausgang der Mischstufe (6) ein Signal mit einer gegenüber der Frequenz des Klopfsensorsignals herabgesetzten Frequenz entsteht, das dem als Tiefpaß-Filter (9) ausgebildeten Filtermittel zuführbar ist, wobei das Ausgangssignal des Tiefpaß-Filters (9) zur Klopferkennung verarbeitbar ist.

2.  Schaltungsanordnung nach Anspruch 1, dadurch gekennzeichnet, daß die Mischstufe (6) einen ersten Multiplizierer (7) aufweist.

3.  Schaltungsanordnung nach Anspruch 1 oder 2, dadurch gekennzeichnet, daß zwischen die Mischstufe (6) und den Klopfsensor eine Pegel-Konstanthalteschaltung (1) geschaltet ist.

4.  Schaltungsanordnung nach Anspruch 3, dadurch gekennzeichnet, daß die Pegel-Konstanthalteschaltung (1) einen zweiten Multiplizierer (2) aufweist, der als Eingangsgrößen das Klopfsensorsignal (KS) und ein Pegelsignal (K) einer Auswerteschaltung (3) erhält.

5.  Schaltungsanordnung nach Anspruch 4, dadurch gekennzeichnet, daß das Pegelsignal (K) von einer Regelkreisschaltung (13) geliefert wird.

6.  Schaltungsanordnung nach einem der vorhergehenden Ansprüche, dadurch gekennzeichnet, daß die Auswerteschaltung (3) als Mikrorechner ($\mu$c) ausgebildet ist.

7. Schaltungsanordnung nach Anspruch 6, dadurch gekennzeichnet, daß die Regelkreisschaltung (13) des Mikrorechners ($\mu$c) über einen Mittelwertbildner (14) an die Pegel-Konstanthalteschaltung (1) angeschlossen ist.

8. Schaltungsanordnung nach einem der Ansprüche 5 bis 7, dadurch gekennzeichnet, daß das Ausgangssignal der Regelkreisschaltung (13) ein pulsbreitenmoduliertes Signal, insbesondere Rechtecksignal, ist.

9. Schaltungsanordnung nach Anspruch 7 oder 8, dadurch gekennzeichnet, daß der Mittelwertbildner (14) von einem RC-Glied (15) gebildet ist.

10. Schaltungsanordnung nach einem der vorhergehenden Ansprüche, dadurch gekennzeichnet, daß das Tiefpaß-Filter (9) von einem RC-Glied (12) gebildet wird.

11. Schaltungsanordnung nach einem der vorhergehenden Ansprüche 6 bis 10, dadurch gekennzeichnet, daß der erste und der zweite Multiplizierer (7, 2) jeweils als Operational Transconductance Amplifier (OTA) ausgebildet ist.

12. Schaltungsanordnung nach einem der vorhergehenden Ansprüche, dadurch gekennzeichnet, daß das Klopfsensorsignal (KS) zwei Mischstufen (6, 6') zugeführt wird, die mit gleichen Oszillatorfrequenzen unterschiedlicher Phasenlage betrieben werden.

13. Schaltungsanordnung nach Anspruch 12, dadurch gekennzeichnet, daß der Phasenwinkelunterschied 90° beträgt.

14. Schaltungsanordnung nach einem der vorhergehenden Ansprüche 12 oder 13, dadurch gekennzeichnet, daß die Oszillatorfrequenzen ($f_{Takt}$, $f'_{Takt}$) der beiden Mischstufen (6, 6') zwei um 90°-phasenverschobenen Taktsignalen (T, T') zugeordnet sind.

15. Schaltungsanordnung nach Anspruch 14, dadurch gekennzeichnet, daß die Taktsignale (T, T') von dem Mikrorechner ($\mu$C) geliefert werden.

16. Schaltungsanordnung nach einem der vorhergehenden Ansprüche 14 oder 15, dadurch gekennzeichnet, daß die Taktsignale (T, T') mittels zweier 2er-Teiler (23, 24) aus einem Grundtaktsignal (GT) doppelter Frequenz gebildet sind, wobei der eine 2er-Teiler (z.B. 23) positiv- und der andere 2er-Teiler (z.B. 24) negativ-flankengetriggert ist.

17. Schaltungsanordnung nach einem der vorhergehenden Ansprüche 6 bis 16, dadurch gekennzeichnet, daß die Ausgänge (8. 8') der beiden Multiplizierer (2, 7) jeweils an einen Tiefpaß (TP, TP') angeschlossen sind und daß die Tiefpaßausgänge (10, 10') mittels einer Verknüpfungsschaltung (20) zusammengeführt werden.

18. Schaltungsanordnung nach Anspruch 17, dadurch gekennzeichnet, daß die Verknüpfungsschaltung (20) eine Additionsstelle (21) ist.

19. Schaltungsanordnung nach einem der vorhergehenden Ansprüche 6 bis 16, dadurch gekennzeichnet, daß die Ausgänge (8, 8') der beiden Multiplizierer (2, 7) mittels der Verknüpfungsschaltung (20) zusammengeführt sind und daß der Ausgang (22) der Verknüpfungsschaltung (20) zu einem Tiefpaß (TP'') führt.

20. Schaltungsanordnung nach Anspruch 19, dadurch gekennzeichnet, daß zwischen Tiefpaß (TP) und Auswerteschaltung (3) ein Schwellwertschalter (S) liegt.

21. Schaltungsanordnung nach Anspruch 20, dadurch gekennzeichnet, daß zwischen dem Tiepfpaß (TP) und der Auswerteschaltung (3) ein Gleichrichter (G1) und ein nachfolgender Integrator (I) geschaltet sind.

**Claims**

1. Circuit arrangement for detecting knocking in an internal combustion engine, having a knock sensor which is assigned to the internal combustion engine and produces a knock sensor signal (KS) which comprises the frequency portions caused by the knocking, having a mixing stage (6) in which a further signal (T) can be superimposed on the knock sensor signal (KS), and having filter means (9) for separating the signal portions which correspond approximately to the expected knocking frequency, it being possible for the further signal (T) which can be fed to the mixing stage (6) to be produced by an oscillator means, and the said signal having a frequency ($f_{Takt}$) which is the same size as the knocking frequency $f_K$ or an oscillator frequency $f_{Takt}$ which deviates from the knocking frequency $f_K$, characterized in that the mixing or superimposition of the signals takes place in such a way that a signal with a frequency which is reduced in comparison with the frequency of the knock sensor signal and which can be fed to the filter means which is constructed as a low-pass filter (9) is produced at the output of the mixing stage (6), it being possible for the output signal of the low-pass filter (9) to be processed for the detection of knocking.

2. Circuit arrangement according to Claim 1, characterized in that the mixing stage (6) has a first multiplier (7).

3. Circuit arrangement according to Claim 1 or 2, characterized in that a circuit (1) which keeps the level constant is connected between the mixing stage (6) and the knock sensor.

4. Circuit arrangement according to Claim 3, characterized in that the circuit (1) which keeps the level constant has a second multiplier (2) which receives, as input variables, the knock sensor signal (KS) and a level signal (K) of an evaluation circuit (3).

5. Circuit arrangement according to Claim 4, characterized in that the level signal (K) is supplied by a control circuit (13).

6. Circuit arrangement according to one of the preceding claims, characterized in that the evaluation circuit (3) is constructed as a microcomputer ($\mu$c).

7. Circuit arrangement according to Claim 6, characterized in that the control circuit (13) of the microcomputer ($\mu$c) is connected via a mean value former (14) to the circuit (1) which keeps the level constant.

8. Circuit arrangement according to one of Claims 5 to 7, characterized in that the output signal of the control circuit (13) is a pulse width-modulated signal, in particular a square-wave signal.

9. Circuit arrangement according to Claim 7 or 8, characterized in that the mean value former (14) is formed by an RC element (15).

10. Circuit arrangement according to one of the preceding claims, characterized in that the low-pass filter (9) is formed by an RC element (12).

11. Circuit arrangement according to one of the preceding Claims 6 to 10, characterized in that the first and the second multipliers (7, 2) are each constructed as operational transconductance amplifiers (OTA).

12. Circuit arrangement according to one of the preceding claims, characterized in that the knock sensor signal (KS) is fed to two mixing stages (6, 6') which are operated with identical oscillator frequencies of different phase angle.

13. Circuit arrangement according to Claim 12, characterized in that the phase angle difference is 90°.

14. Circuit arrangement according to one of the preceding Claims 12 or 13, characterized in that the oscillator frequencies ($f_{Takt}$, $f'_{Takt}$) of the two mixing stages (6, 6') can be assigned to two clock signals (T, T') which are phase-shifted by 90°.

15. Circuit arrangement according to Claim 14, characterized in that the clock signals (T, T') are supplied by the microcomputer ($\mu$C).

**16.** Circuit arrangement according to one of the preceding Claims 14 or 15, characterized in that the clock signals (T, T′) are formed using two halving dividers (23, 24) from a basic clock signal (GT) with double the frequency, the one halving divider (for example 23) being positive-edge triggered and the other halving divider (for example 24) being negative-edge triggered.

**17.** Circuit arrangement according to one of the preceding Claims 6 to 16, characterized in that the outputs (8, 8′) of the two multipliers (2, 7) are each connected to a low-pass filter (TP, TP′), and in that the low-pass outputs (10, 10′) are combined by means of a logic connection circuit (20).

**18.** Circuit arrangement according to Claim 17, characterized in that the logic connection circuit (20) is an addition point (21).

**19.** Circuit arrangement according to one of the preceding Claims 6 to 16, characterized in that the outputs (8, 8′) of the two multipliers (2, 7) are combined by means of the logic connection circuit (20), and in that the output (22) of the logic connection circuit (20) leads to a low-pass filter (TP″).

**20.** Circuit arrangement according to Claim 19, characterized in that a threshold value switch (S) is connected between the low-pass filter (TP) and the evaluation circuit (3).

**21.** Circuit arrangement according to Claim 20, characterized in that a rectifier (G1) and a subsequent integrator (I) are connected between the low-pass filter (TP) and the evaluation circuit (3).

## Revendications

**1.** Circuit de détection du cliquetis d'un moteur à combustion interne comportant un détecteur de cliquetis associé au moteur à combustion interne pour créer un signal de cliquetis (KS) comprenant les composantes de fréquence provoquant le cliquetis, avec un étage-mélangeur (6) dans lequel le signal de cliquetis (KS) peut être combiné à un autre signal (T), ainsi que des moyens de filtre (9) pour séparer les composantes des signaux correspondant sensiblement à la fréquence de cliquetis prévisible, l'autre signal (T) appliqué à l'étage-mélangeur (6) étant créé par un oscillateur et ayant une fréquence ($f_{horl}$) de même valeur que la fréquence de cliquetis ($f_K$) ou une fréquence d'oscillateur ($f_{horl}$) différente de la fréquence de cliquetis ($f_K$), caractérisé en ce que le mélange ou la combinaison des signaux se fait pour qu'à la sortie de l'étage de mélange (6), on obtienne un signal ayant, par rapport à la fréquence du signal de cliquetis, une fréquence plus faible appliquée au moyen d'un filtre constitué par un filtre passe-bas (9), le signal de sortie du filtre passe-bas (9) étant traité pour la détection du cliquetis.

**2.** Circuit selon la revendication 1, caractérisé en ce que l'étage-mélangeur (6) comporte un premier multiplicateur (7).

**3.** Circuit selon la revendication 1 ou 2, caractérisé en ce qu'entre l'étage-mélangeur (6) et le détecteur de cliquetis, il est prévu un circuit maintenant le niveau constant (1).

**4.** Circuit selon la revendication 3, caractérisé en ce que le circuit maintenant le niveau constant (1) comporte un second multiplicateur (2) recevant comme grandeur d'entrée, le signal du détecteur de cliquetis (KS) et un signal de niveau (K) d'un circuit d'exploitation (3).

**5.** Circuit selon la revendication 4, caractérisé en ce que le signal de niveau (K) est fourni par un circuit de boucle de régulation (13).

**6.** Circuit selon l'une des revendications précédentes, caractérisé en ce que le circuit d'exploitation (3) est en forme de microcalculateur (μC).

**7.** Circuit selon la revendication 6, caractérisé en ce que le circuit de la boucle de régulation (13) du microcalculateur (μC) est appliqué par un générateur de valeur moyenne (14) au circuit de niveau constant (1).

**8.** Circuit selon l'une des revendications 5 à 7, caractérisé en ce que le signal de sortie du circuit de régulation (13) est un signal à largeur d'impulsion modulée, notamment un signal rectangulaire.

9. Circuit selon la revendication 7 ou 8, caractérisé en ce que le générateur de valeur moyenne (14) est constitué par un élément RC (15).

10. Circuit selon l'une des revendications précédentes, caractérisé en ce que le filtre passe-bas (9) est formé par un élément RC (12).

11. Circuit selon l'une des revendications précédentes 6 à 10, caractérisé en ce que le premier et le second multiplicateur (7, 2) sont constitués chaque fois par un amplificateur opérationnel à transconductance (amplificateur OTA).

12. Circuit selon l'une des revendications précédentes, caractérisé en ce que le signal de cliquetis (KS) est appliqué à deux étages-mélangeurs (6, 6') fonctionnant avec les mêmes fréquences d'oscillateur mais de phases différentes.

13. Circuit selon la revendication 12, caractérisé en ce que le déphasage est de 90°.

14. Circuit selon l'une des revendications précédentes 12 ou 13, caractérisé en ce que les fréquences d'oscillateur ($f_{horl}$, $f'_{horl}$) des deux étages-mélangeurs (6, 6') sont associées à deux signaux d'horloge (T, T') déphasés de 90°.

15. Circuit selon la revendication 14, caractérisé en ce que les signaux d'horloge (T, T') sont fournis par le microcalculateur ($\mu$C)

16. Circuit selon l'une des revendications précédentes 14 ou 15, caractérisé en ce que les signaux d'horloge (T, T') sont formés par deux diviseurs par deux (23, 24) à partir d'un signal d'horloge de base (GT) de fréquence double, l'un des diviseurs par deux (par exemple le diviseur 23) étant déclenché par le flanc positif et l'autre diviseur par deux (par exemple le diviseur 24) étant déclenché par le flanc négatif.

17. Circuit selon l'une des revendications précédentes 6 à 16, caractérisé en ce que les sorties (8, 8') des deux multiplicateurs (2, 7) sont reliées respectivement à un filtre passe-bas (TP, TP') et les sorties de filtre passe-bas (10, 10') sont réunies par un circuit de combinaison (20).

18. Circuit selon la revendication 17, caractérisé en ce que le circuit de combinaison (20) est un point d'addition (21).

19. Circuit selon l'une des revendications précédentes 6 à 16, caractérisé en ce que les sorties (8, 8') des deux multiplicateurs (2, 7) sont réunies par un circuit de combinaison (20) et la sortie (22) du circuit de combinaison (20) est reliée à un filtre passe-bas (TP'').

20. Circuit selon la revendication 19, caractérisé en ce qu'entre le filtre passe-bas (TP) et le circuit d'exploitation (3), on a un commutateur à seuil (S).

21. Circuit selon la revendication 20, caractérisé en ce qu'entre le filtre passe-bas (TP) et le circuit d'exploitation (3), on a un redresseur (G1) suivi d'un intégrateur (I).

Fig. 1

Fig. 2

# Fig. 3

# Fig. 4

## Fig. 5

## Fig. 6

Fig. 7

Fig. 8

Fig. 9

Fig. 10